Europäisches Patentamt

European Patent Office

Office européen des brevets

(19)

(11) **EP 1 148 359 A1**

(12) **EUROPEAN PATENT APPLICATION**
published in accordance with Art. 158(3) EPC

(43) Date of publication:
**24.10.2001 Bulletin 2001/43**

(51) Int Cl.⁷: **G02B 6/16**, G02B 6/10

(21) Application number: **00970135.0**

(86) International application number:
**PCT/JP00/07544**

(22) Date of filing: **27.10.2000**

(87) International publication number:
**WO 01/33265 (10.05.2001 Gazette 2001/19)**

(84) Designated Contracting States:
**AT BE CH CY DE DK ES FI FR GB GR IE IT LI LU
MC NL PT SE**
Designated Extension States:
**AL LT LV MK RO SI**

(30) Priority: **29.10.1999 JP 30885999**

(71) Applicant: **The Furukawa Electric Co., Ltd.
Tokyo 100-8322 (JP)**

(72) Inventors:
• **Tsuda, Toshiaki,
c/o The Furukawa Elec. Co., Ltd.
Tokyo 100-8322 (JP)**

• **Yodo, Shigehito, The Furukawa Elec. Co., Ltd.
Tokyo 100-8322 (JP)**
• **Shirasaka, Yusei,
c/o The Furukawa Elec. Co., Ltd.
Tokyo 100-8322 (JP)**
• **Emori, Yoshihiro,
c/o The Furukawa Elec. Co., Ltd.
Tokyo 100-8322 (JP)**
• **Namiki, Shu, c/o The Furukawa Elec. Co., Ltd.
Tokyo 100-8322 (JP)**

(74) Representative: **Dealtry, Brian et al
Eric Potter Clarkson,
Park View House,
58 The Ropewalk
Nottingham NG1 5DD (GB)**

(54) **GRATING TYPE OPTICAL COMPONENT**

(57)     A fiber grating optical device that actualizes a wavelength division multiplexing transmission of wavelengths of 1530 nm ~ 1610 nm by compensating a temperature dependency of the EDFA in wavelengths of 1530 nm ~ 1535 nm. An optical fiber is formed with a long period grating of which a change in a grating period is approximately 300 ~ 500 µm, and is given a light transmission loss characteristic having a light transmission loss peak of approximately 1500 ~ 1525 nm due to a propagation mode and a high-order cladding mode through the long period grating of the optical fiber. A temperature dependency shift amount of the light transmission loss peak wavelength is set to approximately 0.02nm/°C ~ 0.05nm/°C. With this shift, a light transmission loss (a characteristic curve a) in a wavelength of 1530 nm at 65°C is set to be larger by approximately 0.4 ~ 0.6 dB than a light transmission loss (a characteristic curve b) at 25°C. A gain temperature dependency in a device constructed by combining an EDFA with an etalon filter is compensated to ± 0.2 dB or under.

Fig. 2 A

Fig. 2 B

**Description**

Technical Field

The present invention relates to a fiber grating optical device having a long period grating (LPG) used for compensating a temperature dependent gain characteristic (a gain temperature dependency) of an optical amplifier such as an EDFA (Erbium Doped Optical Fiber Amplifier).

Background Art

A development of the information-oriented society leads, as a tendency, to an exponential increase in quantity of communication information, and it is a necessary and indispensable matter to attain a speed-up and increase a capacity in optical fiber communications. As an approach to attaining the speed-up and the increase in capacity, an optical fiber amplifier capable of amplifying optical signals while keeping them as light, has been developed by use of a rare earth doped optical fiber such as an erbium doped fiber. With the development of the optical fiber amplifier, the signal light itself is in the process of rapidly increasing its capacity.

On the other hand, for expanding the communication capacity in the optical communications, there is carried out a development of the communications based on a wavelength division multiplexing transmission method in which the optical signals having different wavelengths are transmitted through a single optical fiber. The optical fiber amplifier described above is applied to the optical communication system using the wavelength division multiplexing transmission method (the wavelength division multiplexing transmission system), which, expectedly, expands the communication capacity further and actualizes a long distance transmission.

An EDFA may be given as a typical example of the optical fiber amplifier described above. It is examined to carry out the wavelength division multiplexing transmission by using the EDFA and by setting a transmission band in wavelengths of, e.g., 1530 nm ~ 1610 nm as a gain band of the EDFA.

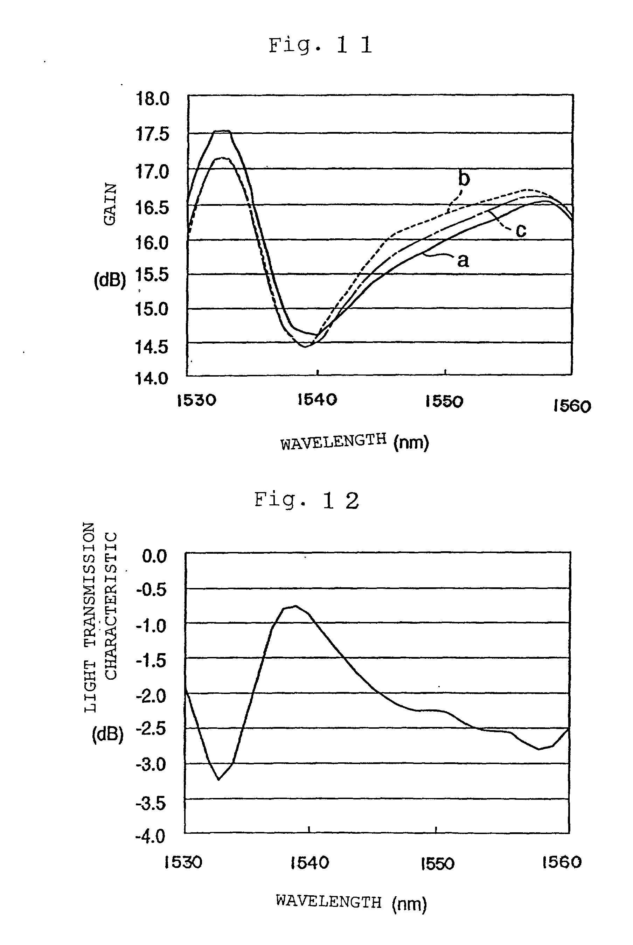

It is required in using the EDFA for the wavelength division multiplexing transmission that the gain wavelength dependency be small in the transmission band, i.e., a gain in the transmission band exhibits uniformity. As shown by, for instance, characteristic curves a ~ c in Fig. 11, the gain of the EDFA shows the wavelength dependency, and the gain especially in the vicinity of wavelengths of 1530 nm ~ 1540 nm, is not uniform. That is, the EDFA gain comes to its maximum value in the vicinity of a wavelength of 1533 nm and decreases toward a wavelength of 1530 nm from approximately 1533 nm. Further, the gain becomes smaller toward a wavelength of 1540 nm from approximately 1533 nm.

Note that the characteristic curve a in Fig. 11 indicates an EDFA gain wavelength dependency at 65°C, the characteristic curve b indicates an EDFA gain wavelength dependency at 0°C, and the characteristic curve c indicates an EDFA gain wavelength dependency at 25°C.

Then, an EDFA device constructed by combining an EDFA with, e.g., an etalon filter for equalizing the gain is used for compensating the EDFA gain wavelength dependency described above. Incidentally, the etalon filter is, as known well, a filter function component in which a light transmission loss characteristic (a light transmission characteristic) assumes a shape of cosine wave.

The etalon filter applied to the above EDFA device is constructed, for example, such that the light transmission characteristic in the vicinity of wavelengths of 1530 nm ~ 1540 nm at 25°C is reverse to the EDFA gain wavelength dependency. That is, as shown in Fig. 12, the light transmission characteristic of the etalon filter applied to the above EDFA device has its minimum light transmissivity (the maximum light transmission loss) in the vicinity of a wavelength of 1533 nm, and is set such that the light transmissivity becomes larger toward a wavelength of 1530 nm from approximately 1533 nm (the light transmission loss decreases), and becomes larger toward a wavelength of 1540 nm from approximately 1533 nm (the light transmission loss decreases).

When the etalon filter having the light transmission characteristic described above is combined with the EDFA, it is feasible to compensate the large gain wavelength dependency of EDFA in the vicinity of wavelengths of 1530 nm ~ 1540 nm at 25°C, and hence the wavelength division multiplexing transmission at 25°C can be actualized by use of the transmission band in a broad wavelength range of 1530 nm ~ 1610 nm.

The EDFA gain, however, has the temperature dependency, and, as indicated by the characteristic curves a ~ c in Fig. 11, the gain characteristic varies depending on the temperature. That is, as obvious from a comparison between the gain characteristic indicated by the characteristic curve c in Fig. 11 at 25°C and the gain characteristic indicated by the characteristic curve a in Fig. 11 at 65°C, the gain in the vicinity of wavelengths of 1530 nm ~ 1540 nm becomes larger as the temperature rises.

On the other hand, the light transmission characteristic of the etalon filter has the temperature dependency shift characteristic on the order of, e.g., 0.005 nm/°C. The light transmission characteristic shifts on the longer wavelength side when the use environment temperature rises, and shifts on the shorter wavelength side when the use environment temperature lowers.

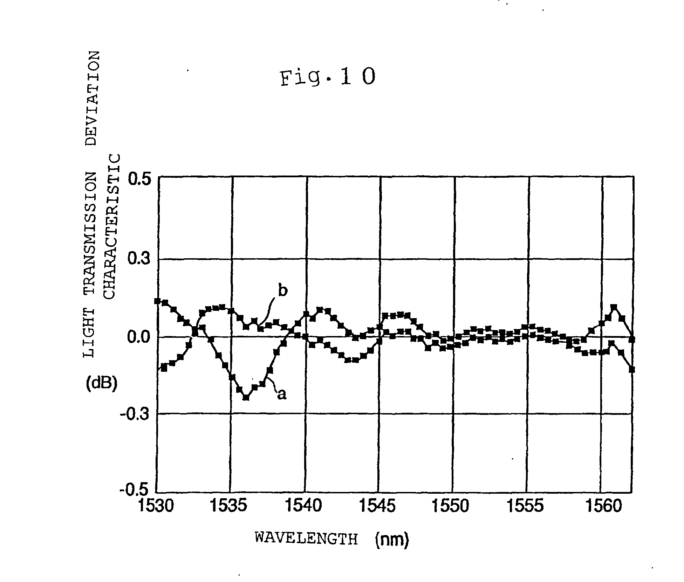

Accordingly, when obtaining the light transmission characteristic at 65°C that is said to be the upper limit value of the use environment temperature in the wavelength division multiplexing transmission system while using as the reference (0) the light transmission characteristic, at 25°C, of the etalon filter exhibiting the characteristic shown in Fig. 12, the light transmission characteristic is as indicated by the characteristic curve a in Fig. 10. Similarly, when obtaining the light transmission characteristic at 0°C that is said to be the lower limit value of the use environment temperature in the wavelength division multiplexing transmission system while using as the reference the light transmission characteristic, at 25°C, of the etalon filter exhibiting the characteristic shown in Fig.12, the light transmission characteristic is as indicated by the characteristic curve b in Fig. 10.

Herein, as is apparent from a comparison between the light transmission characteristic of the etalon filter in the vicinity of a wavelength of 1530 nm shown in Fig. 10 and the gain of the EDFA in the vicinity of a wavelength of 1530 nm shown in Fig. 11, when using as the reference the characteristic at 25°C, both of the gain of the EDFA and the light transmission characteristic of the etalon filter in the vicinity of a wavelength of 1530 nm at 65°C, are plus, and both of the gain of the EDFA and the light transmission characteristic of the etalon filter in the vicinity of a wavelength of 1530 nm at 0°C, are minus.

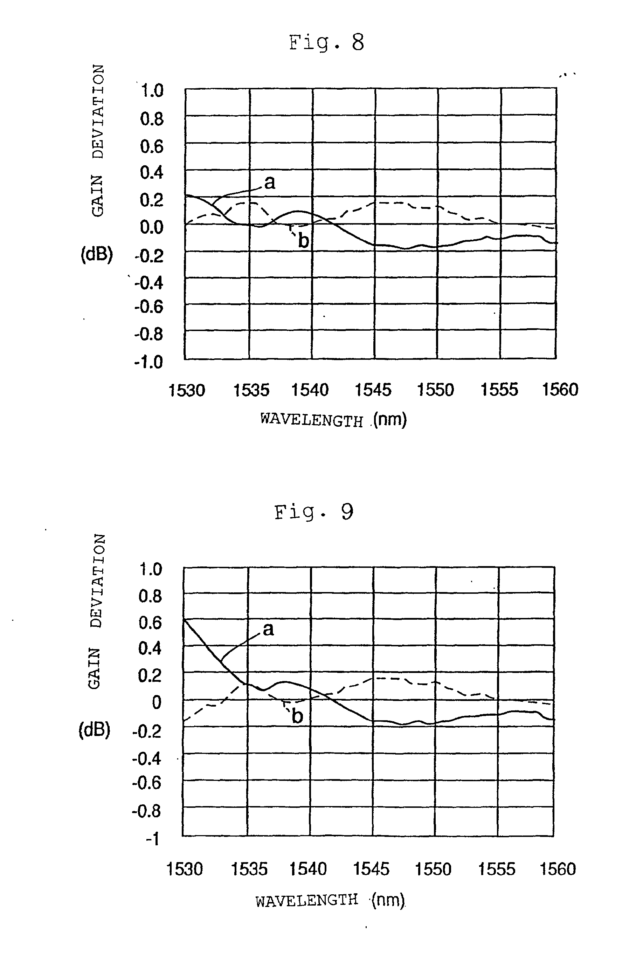

Accordingly, when obtaining the gain wavelength dependencies of the EDFA device at 65°C and 0°C on the basis of the gain wavelength dependency of the EDFA device constructed by combining the EDFA with the etalon filter at 25°C, these dependencies are as indicated by the characteristic curves a (65°C) and the characteristic curve b (0°C) in Fig. 9. As shown by the characteristic curve a in Fig. 9, the gain at 65° with the gain at 25°c as the reference, gradually increases when the wavelength is 1535 nm or less, and reaches up to 0.6 dB when the wavelength is 1530 nm.

It is required in applying the EDFA device to the wavelength division multiplexing transmission system that the gain based on the gain at 25°C is approximately ± 0.2 dB or under within a temperature range of 0°C ~ 65°C. Therefore, the EDFA device has been incapable of meeting this requirement.

Note that, although Fig. 9 shows only the characteristics in wavelengths of 1530 nm ~ 1560 nm, the gain based on the gain at 25°C is approximately ± 0.2 dB or under within the temperature range of 0°C ~ 65°C also in a wavelength range of 1560 nm ~ 1610 nm, and that the EDFA device shown in Fig. 9 satisfies the requirement for compensating the gain deviation on the longer wavelength side in the above transmission band.

It is an object of the present invention, which has been devised to solve the above problems inherent in the prior art, to provide a fiber grating optical device capable of compensating a temperature dependent gain characteristic of an optical amplifier within a use temperature range in a set gain compensation band in wavelengths of, e.g., 1530 nm to 1540 nm.

Disclosure of the Invention

To accomplish the above object, the present invention provides a fiber grating optical device taking the following construction. That is, the present invention is a fiber grating optical device comprising a light wave guide constructed of a core and a cladding, and a long period grating formed in the light waveguide, in which a peak wavelength of a waveform of a light transmission loss characteristic that is positioned on the shorter wavelength side than in a transmission band due to a coupling of a high-order cladding mode to a propagation mode through the long period grating, shifts to the longer wavelength side or to the shorter wavelength side depending on the temperature. The fiber grating optical device of the present invention is structured such that the waveform of the light transmission loss characteristic also shifts to the same side as the peak wavelength depending on the temperature, a light transmission loss value in a band for compensating a temperature dependent gain characteristic of an optical amplifier increases or decreases depending on the temperature by the shift of the waveform of the light transmission loss characteristic toward the longer wavelength side or toward the shorter wavelength side depending on the temperature, and the temperature dependent gain characteristic of the optical amplifier is compensated by the increase or decrease of the light transmission loss value.

According to one mode of the present invention, the peak wavelength of the waveform of the light transmission loss characteristic is on the shorter wavelength side than the transmission band, and the difference between the maximum value and the minimum value of the light transmission loss within a use temperature range is set to 0.5 dB or under in a band on the longer wavelength side than the band for compensating the temperature dependent gain characteristic of the optical amplifier in the transmission band.

Further, according to one aspect of the present invention, the difference between the maximum value and the minimum value of the light transmission loss within the use temperature range is set to 2.6 dB or under in the band for compensating the temperature dependent gain characteristic of the optical amplifier.

Moreover, according to another mode of the present invention, a fiber grating optical device comprises a light wave guide constructed of a core and a cladding, and a long period grating formed in the light waveguide, with a change in a fiber grating period being approximately 100 μm ~ several hundreds μm. The fiber grating optical device is structured such that; the light waveguide has a light transmission loss characteristic having a plurality of light transmission loss peaks with wavelength intervals interposed therebetween in a first-order mode through an Nth-order (N is an integer of 2 or larger) mode due to a coupling of a high-order cladding mode to a propagation mode through the long period grating; a transmission loss peak wavelength in a predetermined set-order mode among those light transmission loss peaks, is on the shorter wavelength side than a transmission band; a light transmission loss peak wavelength in the next order mode to the set-order mode is on the longer wavelength side than the transmission band; the difference between the maximum value and the minimum value of the light transmission loss within a use temperature range is set to 0.5 dB or under in a band on the longer wavelength side than a band for compensating the temperature dependent gain characteristic of an optical amplifier in the transmission band; the light transmission loss peak wavelength in the set-order mode shifts, as well as a waveform of the light transmission loss characteristic including the light transmission loss peak wavelength, to the longer wavelength side or to the shorter wavelength side depending on the temperature; and a light transmission loss value in the band for compensating the temperature dependent gain characteristic of the optical amplifier thereby increases or decreases depending on the temperature to compensate the temperature dependent gain characteristic of the optical amplifier.

Herein, preferably, the transmission band is set to approximately 1530 nm ~ 1610 nm, and the light transmission loss peak wavelength in the set-order mode is set to approximately 1500 nm ~ 1525 nm.

Further, it is preferable that the light transmission loss peak wavelength in the set-order mode shifts depending on the temperature toward the longer wavelength side by approximately 0.02 nm/°C ~ 0.05 nm/°C.

According to the present invention, in the fiber grating optical device having the constructions given above, it is desirable that a change in the grating period is set to approximately 300 μm ~ 500 μm.

Further as one example, the set-order mode is set to any one of a fourth-order mode through a seventh-order mode.

Moreover, a light transmission loss in a wavelength of 1530 nm at 65°C is larger by approximately 0.4 dB ~ 0.6 dB than a light transmission loss at 25°C.

Further, the light waveguide according to the present invention may be an optical fiber as one example thereof.

Furthermore, it is preferable that a protective member composed of a quartz material accommodates a grating forming portion.

According to the present invention having the above constructions, the long period grating is formed in the light waveguide such as the optical fiber that is applied to the fiber grating optical device. The peak wavelength of the waveform of the light transmission loss characteristic and the waveform of the light transmission loss characteristic due to the coupling of the high-order cladding mode to the propagation mode through the long period grating, shift to the longer wavelength side or to the shorter wavelength side depending on the temperature. Then, according to the present invention, with the above shift, the light transmission loss value in the band for compensating the temperature dependent gain characteristic of the optical amplifier increases or decreases depending on the temperature, and, with this increase or decrease in the light transmission loss value, the temperature dependent gain characteristic of the optical amplifier is compensated. Hence, the temperature dependent gain characteristic of the optical amplifier can be compensated by use of the fiber grating optical device of the present invention.

That is, according to the present invention, the peak wavelength of the waveform of the light transmission loss characteristic and the waveform of the light transmission loss characteristic due to the coupling of the high-order cladding mode to the propagation mode through the long period grating formed in the light waveguide, shift to the longer wavelength side or to the shorter wavelength side depending on the temperature. With the above shift, the light transmission loss value in the band for compensating the temperature dependent gain characteristic of the optical amplifier increases or decreases depending on the temperature, and, with this increase or decrease in the light transmission loss value, the temperature dependent gain characteristic of the optical amplifier is compensated. Hence, the temperature dependent gain characteristic of the optical amplifier can be compensated by use of the fiber grating optical device of the present invention.

Accordingly, for example, when the fiber grating optical device of the present invention is combined with a device constructed by combining the optical amplifier, such as an EDFA that has hitherto been developed, with an etalon filter, the temperature dependency of the gain of the optical amplifier can be compensated over the entire transmission band. For instance, a high quality wavelength division multiplexing transmission can be actualized in the entire use environment temperature range.

Further, the present invention has a structure in which the difference between the maximum value and the minimum value of the light transmission loss within the use temperature range is set to 0.5 dB or under in the band on the longer wavelength side than the band for compensating the temperature dependent gain characteristic of the optical amplifier in the transmission band. As a result, the difference between the maximum value and the minimum value of the light transmission loss within the use temperature range is set to 0.5 dB or under and becomes substantially flat in the band on the longer wavelength side than the band for compensating the gain temperature characteristic of the optical amplifier in the transmission band. Hence, there is almost no possibility of the light transmission loss characteristic of the fiber grating optical device exerting an influence on the gain of the optical amplifier on the longer wavelength side in the transmission band.

Then, the difference between the maximum value and the minimum value of the light transmission loss within the use temperature range is set to 2.6 dB or under in the band for compensating the temperature dependent gain characteristic of the optical amplifier, whereby a temperature-dependent shift amount of the waveform of the light transmission loss characteristic can be set to an adequate value, and the temperature dependent gain characteristic of the optical amplifier can be accurately compensated.

Further, among the light transmission loss peak wavelengths due to the coupling of the high-order cladding mode to the propagation mode through the long period grating formed in the light waveguide, the light transmission loss peak wavelength in the set-order mode shifts, as well as the waveform of the light transmission loss characteristic including the light transmission loss peak wavelength, to the longer wavelength side or to the shorter wavelength side depending on the temperature. Then, the light transmission loss value in the band for compensating the temperature dependent gain characteristic of the optical amplifier thereby increases or decreases depending on the temperature to compensate the temperature dependent gain characteristic of the optical amplifier. With this structure, the gain temperature characteristic of the optical amplifier can be surely compensated by the light transmission loss characteristic of the light waveguide.

For example, the fiber grating optical device is structured such that: the light transmission loss characteristic having the light transmission loss peak in the set-order mode, and this light transmission loss peak wavelength is on the shorter wavelength side than the transmission band; the light transmission loss peak wavelength in the set-order mode shifts, as well as the waveform of the light transmission loss characteristic including the light transmission loss peak wavelength, to the longer wavelength side depending on the temperature; and the light transmission loss value in the band for compensating the temperature dependent gain characteristic of the optical amplifier thereby increases depending on the temperature to compensate the temperature dependent gain characteristic of the optical amplifier. With this structure, the temperature dependent gain characteristic of the optical amplifier can be compensated by the light transmission loss characteristic of the light waveguide such as the optical fiber.

Accordingly, for example, when the fiber grating optical device of the present invention is combined with a device constructed by combining an optical amplifier such as an EDFA with an etalon filter as shown in the example of the prior art, the temperature dependency of the gain of the optical amplifier can be compensated in, e.g., the transmission band, and the high quality wavelength division multiplexing transmission can be actualized over the entire use environment temperature range.

Especially, the transmission band is set to approximately 1530 nm ~ 1610 nm, and the light transmission loss peak wavelength in the set-order mode at a set temperature is set to approximately 1500 nm ~ 1525 nm. Then, the wavelength band that is a gain band of the EDFA, the typical optical amplifier, and is examined as a band for the wavelength division multiplexing transmission at present, is used as the transmission band. The EDFA gain temperature dependency in this wavelength division multiplexing transmission system is thus compensated, and the high quality wavelength division multiplexing transmission can be actualized.

Further, the light transmission loss peak wavelength in the set-order mode shifts depending on the temperature toward the longer wavelength side by approximately 0.02 nm/°C ~ 0.05 nm/°C. According to this structure, the above temperature dependency shift characteristic is set to an adequate value, and, with the shift of the light transmission loss characteristic which accompanies with this temperature dependency shift characteristic, it is feasible to compensate the gain temperature dependency of the optical amplifier in wavelengths of approximately 1530 nm ~ 1540 nm.

Further, according to the structure of the present invention, the change in the grating period is set to approximately 300 μm ~ 500 μm, the grating having the above period change is formed in the single mode optical fiber generally used for the optical communications. This makes it possible to easily form the fiber grating optical device having the light transmission loss peak in wavelengths of approximately 1500 nm ~ 1525 nm and in the band exceeding a wavelength of 1610 nm, and also having light transmission loss characteristic in which the difference between the maximum value and the minimum value of the light transmission loss characteristic in wavelengths of 1540 nm ~ 1610 nm is substantially flattened so as to be 0.5 dB or under.

Furthermore, according to the structure of the present invention, the set-order mode is set to any one of the fourth-order mode through the seventh-order mode. When the change in the grating period is set to approximately 300 μm ~ 500 μm, the light transmission loss peak wavelength in the set-order mode is set to approximately 1500 nm ~ 1525 nm, and the light transmission loss peak wavelength in the next-order mode to the set-order mode can be set in the band exceeding a wavelength of 1610 nm. Then, it is feasible to easily form the fiber grating optical device having the light transmission loss characteristic in which the difference between the maximum value and the minimum value of the light transmission loss characteristic in wavelengths of 1540 nm ~ 1610 nm is substantially flattened so as to be 0.5 dB or under.

Moreover, according to the structure of the present invention in which the light transmission loss in a wavelength of 1530 nm at 65°C is larger by approximately 0.4 dB ~ 0.6 dB than the light transmission loss at 25°C, the temperature dependency, in a wavelength of 1530 nm, of the device constructed by combining the etalon filter with the EDFA that has hitherto been developed, can be surely compensated to ± 0.2 dB or under.

Furthermore, according to the structure of the present invention in which the light waveguide is the optical fiber, the fiber grating optical device having the above excellent effects can be formed by use of the optical fiber. For instance, it is easily to actualize the high quality wavelength division multiplexing transmission by combining the EDFA with this optical fiber for the wavelength division multiplexing transmission.

Furthermore, according to the structure of the present invention in which the protective member composed of the quartz material accommodates the grating forming portion, it is feasible to make it difficult for a force from outside to work upon the fiber grating forming portion and to prevent a change in the cladding mode of the optical fiber. Hence, the fiber grating optical device having the above excellent characteristics can be kept highly reliable over a long period of time.

Brief Description of Drawings

Fig. 1A is a graph showing a light transmission loss characteristic in one embodiment of a fiber grating optical device according to the present invention, and Fig. 1B is a graph showing the partially enlarged light transmission loss characteristic.

Fig. 2A is a graph showing a light transmission characteristic in a wavelength range of 1540 nm ~ 1560 nm in the above embodiment, and Fig. 2B is a graph showing a light transmission characteristic within the same wavelength range in another embodiment of the fiber grating optical device according to the present invention.

Fig. 3 is a graph showing a light transmission loss characteristic of the fiber grating optical device in the above embodiment at 65°C and a light transmission loss characteristic at 0°C when a light transmission loss characteristic at 25°c is used as the reference.

Fig. 4 is a graph showing a temperature dependency shift characteristic of a light transmission loss peak wavelength in the above embodiment.

Figs. 5A and 5B are perspective views each showing an example of a protective member for protecting a grating forming portion in the above embodiment, Figs. 5C and 5D are vertical sectional views each showing a portion provided with the protective member of the fiber grating optical device in the above embodiment, Fig. 5E is a cross sectional view of the portion provided with the protective member of the fiber grating optical device shown in Fig. 5C, and Fig. 5F is a cross sectional view of the portion provided with the protective member of the fiber grating optical device shown in Fig. 5D.

Fig. 6 is a graph showing a relation between a grating period of a grating formed in an optical fiber and a coupling wavelength of the optical fiber when a composition of the optical fiber is fixed.

Fig. 7 is a graph schematically showing a light transmission loss characteristic in the optical fiber when the grating period of the optical fiber is set to approximately 440 μm in Fig. 6.

Fig. 8 is a graph showing a gain wavelength dependency when the fiber grating optical device in the above embodiment is combined with a conventional EDFA device (EDFA plus an etalon filter).

Fig. 9 is a graph showing a gain wavelength dependency of the conventional EDFA device (EDFA plus the etalon filter).

Fig. 10 is a graph showing a light transmission loss characteristic, at 65°C, of the etalon filter combined with the EDFA to form the conventional EDFA device and a light transmission loss characteristic at 0°C when a light transmission loss characteristic at 25°C is used as the reference.

Fig. 11 is a graph showing an EDFA gain wavelength dependency.

Fig. 12 is a graph showing a light transmission loss characteristic, at 25°C, of the etalon filter combined with the EDFA to form the conventional EDFA device.

Best Mode for carrying out the Invention

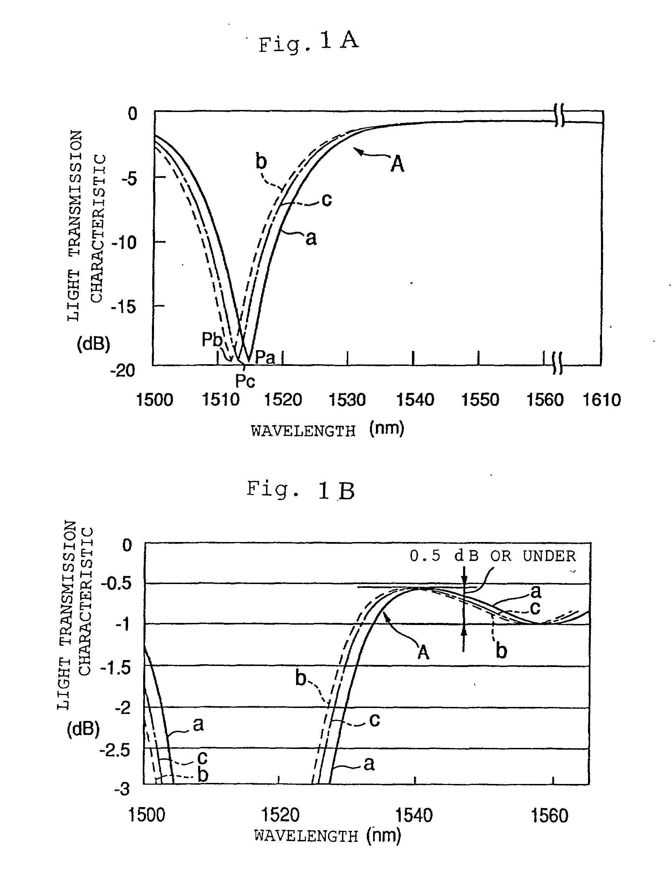

The present invention will be explained in greater details with reference to the accompanying drawings. Note that the components having the same names as those in the prior art are denoted by the same symbols in the following discussion, and their explanations are simplified or omitted. Fig. 1A shows a light transmission loss characteristic (light transmission characteristic) in one embodiment of a fiber grating optical device according to the present invention. Note that a characteristic curve a in Fig. 1A shows a light transmission loss characteristic at 65°C, a characteristic curve b in Fig. 1A shows a light transmission loss characteristic at 0°C, and a characteristic curve c in Fig. 1A shows a light transmission loss characteristic at 25°C.

The fiber grating optical device in this embodiment may be applied also to, e.g., a wavelength division multiplexing transmission system in a transmission band of which a wavelength is approximately 1530 nm ~ 1610 nm. The fiber grating optical device in this embodiment is combined with a conventional EDFA device (a device in which an EDFA is combined with an etalon filter) exhibiting the gain wavelength dependent characteristic shown in Fig. 9, thereby actualizing equalization of an optical amplification gain in the above transmission band within a use environment temperature range.

The fiber grating optical device in this embodiment has an optical fiber serving as an optical waveguide formed by covering a periphery of a core with a cladding. This optical fiber is a single mode optical fiber generally used for the optical communications, and a profile of a refractive index of the optical fiber is of a well-known step index type. A specific refractive index difference Δ of the core from pure silica is, e.g., 0.35%, and a core diameter is approximately 10 μm. The core is composed of silica doped with germanium of $GeO_2$, and the cladding is composed of the pure silica.

Note that the specific refractive index difference Δ (Δc) of the core from the pure silica in this specification is defined by the following formula (1):

$$\Delta c = \{(n_{co}^2 - n_o^2) / 2n_{co}^2\} \times 100 \tag{1}$$

where no is a refractive index of the core, and $n_o$ is a refractive index of the pure silica.

The above optical fiber is formed with a long period grating in which a change in period of the grating is approximately 440 μm. This optical fiber has, as shown in Fig. 1A, a peak wavelength taking a waveform of the light transmission loss characteristic due to a coupling of a high-order cladding mode to a propagation mode via the long period grating of the optical fiber. This peak wavelength corresponds to, for instance, Pa (65°C), Pb (0°C) and Pc (25°C) of the characteristic curves a, b and c, respectively, in Fig. 1A. In other words, the optical fiber applied to this embodiment exhibits the light transmission loss characteristic having the wavelength (e.g., Pa (65°C), Pb (0°C) and Pc (25°C)) of the light transmission loss peak.

Note that values of the light transmission loss peak wavelengths Pa, Pb and Pc depend on a temperature as described above, and, as the temperature rises, the light transmission loss peak wavelengths shift toward a long-wavelength side, for example, Pb → Pc → Pa. Further, a wavelength of the light transmission loss characteristic including the light transmission loss peak wavelengths pa, pb and Pc also depends on the temperature, and shifts to the same side as the light transmission loss peak wavelengths Pa, Pb and Pc (in other words, the light transmission loss peak wavelengths and the light transmission loss waveform have a temperature dependency shift characteristic in a positive direction.).

Further, the long period grating described above is formed by, for example, executing a high-pressure hydrogen treatment of the optical fiber having the above composition under 15 MPa for three weeks, and thereafter irradiating with an argon laser for generating second harmonic a 22 mm long grating, while setting the grating period to approximately 440 μm.

As well known, when a silica glass doped with germanium is irradiated with ultraviolet rays having a wavelength in the vicinity of 240 nm, a defect takes place in the grating of the glass, and a property called a photo refractive effect is assumed in which the refractive index rises. The above grating is obtained by periodically increasing the refractive index of, e.g., the core utilizing this property and by periodically irradiating the germanium-doped core with the ultraviolet rays along its longitudinal direction. Further, a grating whose grating period (the change in the period) is set to approximately 100 μm ~ several hundreds μm is called a long period grating.

What is characteristic of the fiber grating optical device in this embodiment is that it has the following characteristics because of the formation of the above long period grating.

That is, one characteristic is that, as described above, the light transmission loss peak wavelength (Pa, etc.) is set so as to be on the shorter wavelength side than the wavelengths 1530 nm ~ 1610 nm defined as the transmission band, the light transmission loss value in the above compensation band increases depending on the temperature due to the positive-directional temperature dependency shift characteristic of the light transmission loss waveform including this light transmission loss peak wavelength, and a temperature dependent gain characteristic of the optical amplifier is compensated to ± 0.2 dB or under. Another characteristic is that, as shown in Fig. 1B, a difference between the maximum value and the minimum value of the light transmission loss within the use temperature range is set to 0.5 dB or smaller in a band on the longer wavelength side than the compensation band (approximately 1530 nm ~ 1540 nm) for compensating the temperature dependent gain characteristic of the optical amplifier in the above transmission band.

In this embodiment, having the characteristics given above, the fiber grating optical device in this embodiment is combined with the conventional EDFA device (a device in which an EDFA is combined with an etalon filter) that has the gain characteristic shown in Fig. 9 to set the gain temperature dependency of the EDFA device plus fiber grating optical device to ± 0.2 dB or under over the entire transmission band, as shown in Fig. 8.

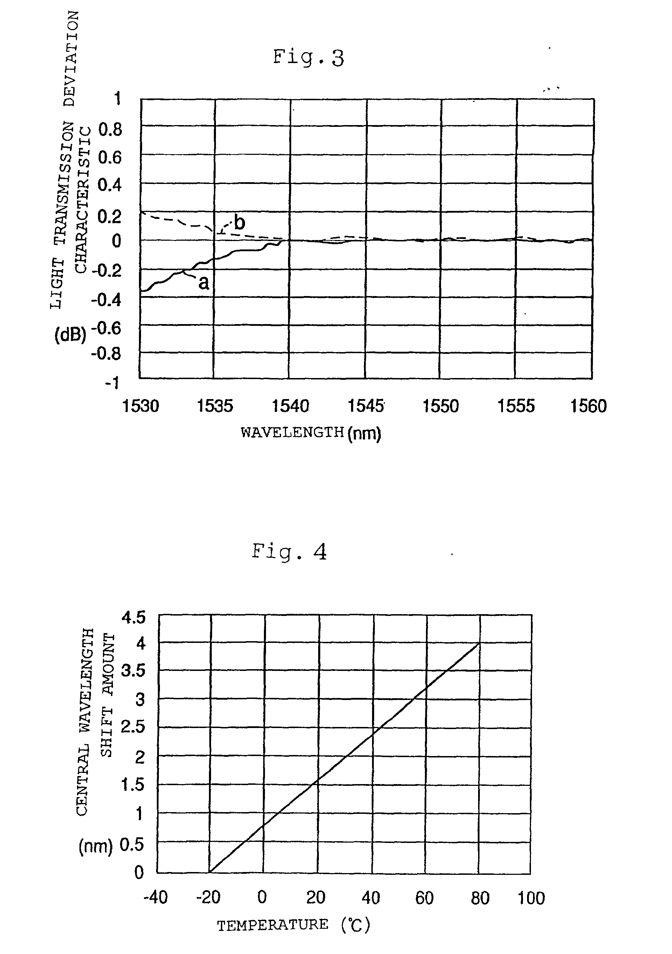

The temperature dependency shift characteristic (of how much the light transmission loss peak wavelength shifts to the larger wavelength side or to the shorter wavelength side depending on the temperature) of the above light transmission loss peak wavelength, is approximately 0.04 nm/°C. This characteristic is shown in Fig. 4. Note that Fig. 4 shows a graph of shift amount obtained based on the light transmission loss peak wavelength at -20°C.

Further, with this temperature dependency shift characteristic of the light transmission loss peak wavelength, the light transmission loss waveform shifts to the longer wavelength side or to the shorter wavelength side (the waveform shifts to the longer wavelength side depending on the temperature in this embodiment), and also shifted is a hem (corresponding to a segment A in Fig. 1A) of the light transmission loss curve that is formed on the longer wavelength side of the above light transmission loss peak wavelength. Therefore, the light transmission loss characteristic at 65°C when based on the light transmission loss characteristic at 25°C, is as indicated by the characteristic curve a in Fig. 3. The light transmission loss characteristic at 0°C when based on the light transmission loss characteristic at 25°C, is as indicated by the characteristic curve b in Fig. 3.

Note that Fig. 3 shows the above respective light transmission loss characteristics in the wavelength range of only 1530 nm ~ 1560 nm, however, the characteristic in a wavelength range of 1560 nm ~ 1610 nm is the same as in the wavelengths 1550 nm ~ 1560 nm.

As indicated by the characteristic curve a in Fig. 3, the light transmission loss characteristic at 65°C when based on the light transmission loss characteristic at 25°C, is that the loss becomes larger as the wavelength changes from 1540 nm to 1530 nm. The light transmission loss of a wavelength of 1530 nm at 65°C is larger by approximately 0.4 dB than the value at 25°C. Further, as indicated by the characteristic curve b in Fig. 3, the light transmission loss characteristic at 0°C when based on the light transmission loss characteristic at 25°C, is that the loss becomes smaller as the wavelength changes from 1540 nm to 1530 nm. The light transmission loss of a wavelength of 1530 nm at 0°C is smaller by approximately 0.2 dB than the value at 25°C.

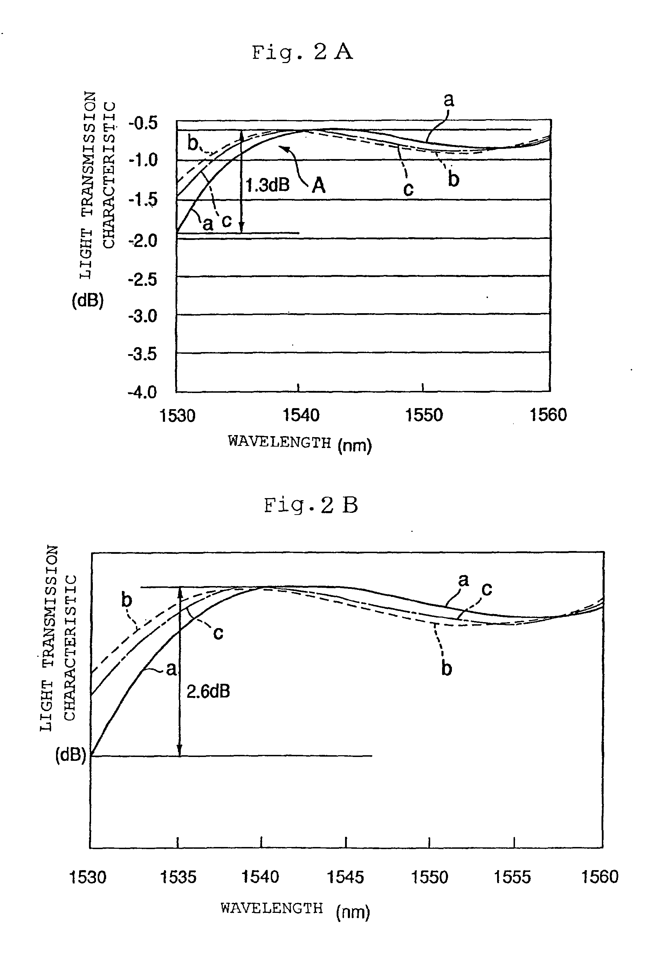

According to the light transmission loss characteristic of the fiber grating optical device in this embodiment, in the wavelength band of approximately 1530 nm ~ 1540 nm for compensating the temperature dependent gain characteristic of the optical amplifier, as shown in Fig. 2A, the difference between the maximum value and the minimum value of the light transmission loss in the use temperature range (0°C ~ 65°C) is set to 1.3 dB or under.

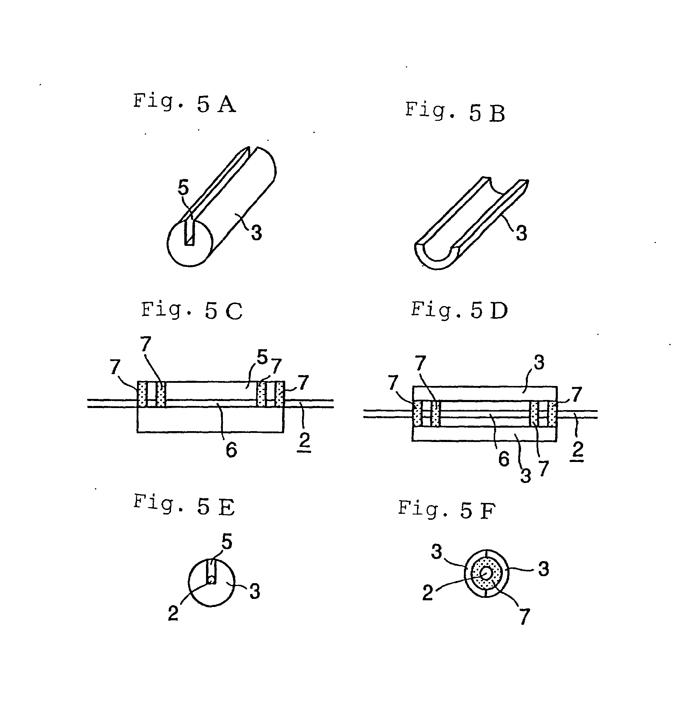

This embodiment exhibits the light transmission loss characteristic as the one described above, and, according to this embodiment, a protective member 3 composed of a quartz material, as shown in Figs. 5C ~ 5F, accommodates a fiber grating forming portion 6 in order to hold the above characteristic.

The protective member 3 may take a columnar shape formed with a slit 5 as shown in Fig. 5A, and may also take such a cylindrical shape consisting of two of half-split sleeves that are butt-joined to each other. Figs. 5C and 5E show examples where the protective member 3 shown in Fig. 5A are applied. Figs. 5D and 5F show examples where the protective member 3 shown in Fig. 5B are applied. As shown in Figs. 5C and 5D, the right and left ends of each protective member 3 are fixed to the right and left ends of the grating forming portion 6 by a bonding agent 7.

Normally, the fiber grating formed by providing the optical fiber with the grating is formed by irradiating with ultraviolet rays the optical fiber in a state where a coating on the outer periphery side of the cladding is removed. Therefore, the grating forming portion 6 formed in the optical fiber is easily influenced by a force given from outside. Such being the case, in this embodiment, the protective member 3 composed of the quartz material accommodates this grating forming portion 6, and a tensile force is kept by fixing at least both ends of the grating forming portion 6 with the bonding agents 7 so that the peak (central) wavelength of the waveform of the light transmission loss characteristic does not change due to the influence of the force given from outside, thus keeping the above light transmission loss characteristic.

By the way, the present inventors have made the following examinations as follows on the occasion of specifying the configuration of the fiber grating optical device of this embodiment.

The optical fiber, even in the case of an optical fiber generally called a single mode optical fiber, is not strictly in a single mode due to the fact that a cladding thickness takes a finite value, and there exist a multiplicity of high-order modes ($HE_{12}$, $HE_{13}$, ..., $HE_{1m}$) in which attenuation occurs soon because of their weak containment, other than a mode ($HE_{11}$) for the propagation through the core. The high-order modes are referred to as cladding modes.

Then, when the optical fiber is formed with the long period grating in which the change in the grating period is approximately 100 μm to several hundreds μm, the optical fiber can be given the light transmission loss characteristic having a plurality of light transmission loss peaks with wavelength interposed therebetween in a first-order mode to an Nth-order mode (N is an integer of 2 or larger) due to coupling of the propagation mode to the high-order cladding mode via the long period grating of the optical fiber.

Note that if the change in the grating period is set to 100 μm ~ several hundreds μm, the power of the optical fiber waveguide mode can be coupled to the cladding mode, and almost all the power coupled to the cladding mode turns out directly to be a loss. Hence, when forming the long period grating, as explained above, the light transmission loss peak wavelength can be given. The long period grating has, unlike a short period grating, a function as a filter element with no reflection. Therefore, the long period grating has also a function of controlling ASE (Amplified Spontaneous Emission) light of the EDFA.

A plurality of light transmission loss peak wavelengths (central wavelengths ) λc in the first-order mode through the Nth-order mode are each given by the following formula (2):

$$\lambda c = \Lambda \ (n_{co} - n_{c1}^{(n)}) \tag{2}$$

where $\Lambda$ is a period of the grating, $n_{c0}$ is an effective refractive index inside the core in the propagation mode, and $n_{c1}^{(n)}$ is an effective refractive index in an nth-order (n is an integer of 1 or larger) cladding mode.

Note that when obtaining the light transmission loss peak wavelength in the first-order mode in the formula (2), n in $n_{c1}^{(n)}$ is set to 1, and, when obtaining the light transmission loss peak wavelength in the Nth-order mode, n in $n_{c1}^{(n)}$ is set such that n = N.

The effective refractive index inside the core in the propagation mode and the effective refractive index in the cladding mode, are each determined by the compositions of the core and of the cladding, and by other factors. It is therefore feasible to determine the plurality of light transmission loss peak wavelengths in the first-order through the Nth-order mode by setting at least one of the composition of the optical fiber and the grating period in many ways.

Note that the first-order mode is a coupling wavelength where the basic mode (propagation mode) $HE_{11}$ is coupled to the high-order mode $HE_{12}$. Then, the second-order mode is a coupling wavelength where the basic mode $HE_{11}$ is coupled to the high-order mode $HE_{13}$. The third-order mode is a coupling wavelength where the basic mode $HE_{11}$ is coupled to the high-order mode $HE_{14}$. The nth-order mode is a coupling wavelength where the basic mode $HE_{11}$ is coupled to the high-order mode $HE_{1m}$ (m = n + 1, in this case).

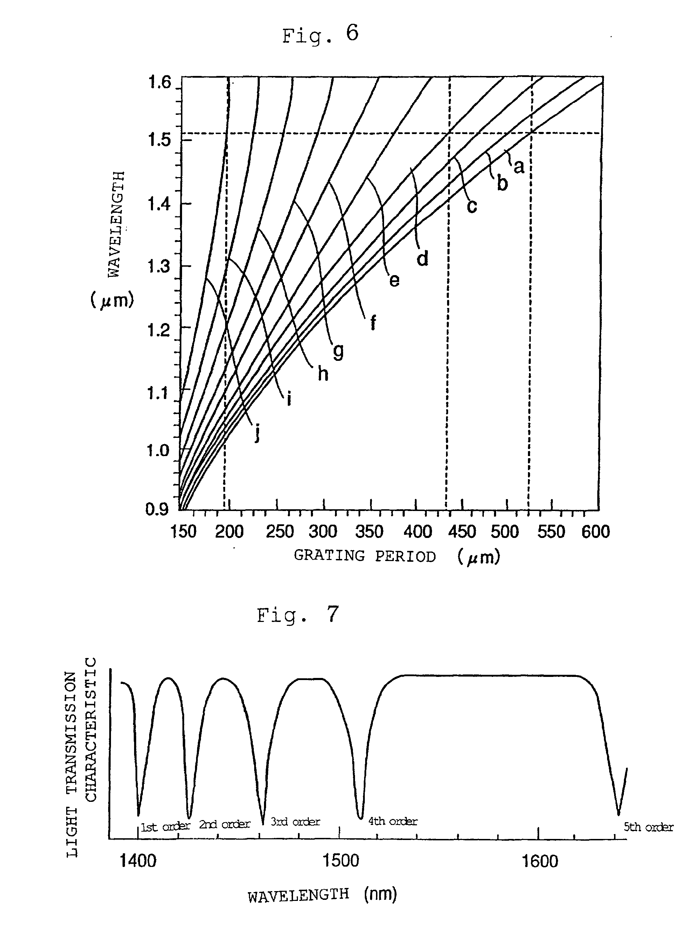

Fig. 6 schematically shows a relation between the period of the grating formed in the optical fiber and the coupling wavelength of the optical fiber when the composition of the optical fiber is fixed. The coupling wavelengths indicated by characteristic curves a ~ j in Fig. 6 are wavelengths that become peak values of the light transmission losses. Therefore, the above coupling wavelengths are called the light transmission loss peak wavelengths in the first-order mode through the Nth-order (herein, N = 10) mode in this specification. Note that the characteristic curve a shown in Fig. 6 corresponds to the first-order mode, the characteristic curve b corresponds to the second-order mode, the characteristic curve c corresponds to the third-order mode, and the characteristic curve d corresponds to the fourth-order mode. The light transmission loss peaks in the first-, second-, third-, ..., 10th-order modes are shown in Fig. 6 from right to left. The values shown in Fig. 6 are those at 25°C.

As shown in Fig. 6, the period of the grating formed in the optical fiber (a fiber grating period) is set to, e.g., approximately 150 μm ~ 580 μm, whereby the light transmission loss peak wavelengths in the multi-order modes can be formed within the wavelength range of 0.9 μm (900 nm) ~ 1.6 μm (1600 nm). Further, the peak wavelength at 25°C in each of the multi-order modes can be determined as intended by changing the fiber grating period.

Then, in an attempt to apply the fiber grating optical device in this embodiment to a gain equalizer having a wavelength of 1530 nm ~ 1610 nm that is an EDFA gain band and is examined as a transmission band of the wavelength division multiplexing transmission system, the present inventors examined the period of the grating formed in the single mode optical fiber and the set-order modes so that the difference between the maximum value and the minimum value of the light transmission loss in the use temperature range becomes 0.5 dB or smaller in a band on the longer wavelength side than the band (the wavelengths are approximately 1530 nm ~ 1540 nm) for compensating the temperature dependent gain characteristic of the optical amplifier in the transmission band, and so that the light transmission loss peak wavelength in the predetermined order mode among the plurality of light transmission loss peaks is on the shorter wavelength side than the transmission band and the light transmission loss peak wavelength in the next order mode to the predetermined order mode is on the longer wavelength side than the transmission band.

As a result, when the grating period is set to approximately 440 μm, as shown in Fig. 7, the light transmission loss peak wavelengths in the first-order through fifth-order modes are formed. When the set-order mode is set to the fourth-order mode, the light transmission loss peak wavelength in the fourth-order mode is about 1510 nm. The light transmission loss peak wavelength in the fifth-order mode next to the set-order mode is on the longer wavelength side (approximately 1640 nm in Fig. 6) than 1610 nm. Moreover, the present inventors have found that the difference between the maximum value and the minimum value of the light transmission loss characteristic is 0.5 dB or under on the longer wavelength side than the compensation band in the transmission band, and thus becomes substantially flat.

Note that when trying to form the light transmission loss peak wavelength in the vicinity of a wavelength of 1510 nm, each of the characteristic curves a ~ j shown in Fig. 6 has a cross-point with a line of a wavelength of 1.51 μm (1510 nm). Accordingly, the set-order mode is determined in accordance with a value of change in the grating period, whereby even if the value of change in the grating period deviates from about 440 μm, the fiber grating optical device having the light transmission loss peak wavelength in the vicinity of a wavelength of 1510 nm can be formed.

If the change in the grating period is set to a value as small as, e.g., approximately 190 μm, however, a gradient of the characteristic curve j (the characteristic curve in the tenthorder mode) intersecting a wavelength of 1510 nm is steep. Hence, the value of the light transmission loss peak wavelength might deviate largely due to a formation error of the change in the grating period, and it is difficult to enhance the yield of the fiber grating optical device.

Further, if the change in the grating period is set to a value as large as, e.g., approximately 530 μm, the characteristic curve a (the characteristic curve in the first-order mode) intersecting a wavelength of 1510 nm is proximal to the next characteristic curve b (the characteristic curve in the second-order mode), and this results in formation of the light transmission loss peak wavelength in the next-order mode in the vicinity of a wavelength of 1520 nm that is on the longer wavelength side than a wavelength of 1510 nm. Accordingly, as in the embodiment discussed above, when the transmission band ranges from 1530 nm up to 1610 nm and the light transmission loss on the longer wavelength side of this band should be substantially flat, it is not preferable that the change in the grating period is set to 440 μm or larger in Fig. 6.

Under this circumstance, in consideration of easiness of manufacturing such a fiber grating optical device and of the transmission band, as explained above, the grating period is set to approximately 440 μm, and the set-order mode is set to the fourth-order mode in this embodiment.

Further, the temperature dependent characteristic of the light transmission loss characteristic of the fiber grating optical device formed with the long period grating as in this embodiment, can be obtained by differentiating the formula (2) with the temperature T, and given by the following formula (3):

$$d\lambda c/dT = \{(n_{c0} - n_{c1}^{(n)}) \, d\Lambda/dT\} + \Lambda \, \{(n_{c0}/dT) - (n_{c1}^{(n)}/dT)\} \qquad (3)$$

where $d\Lambda/dT \approx 0$, and hence the formula (3) can be approximated by the following formula (4):

$$d\lambda c/dT = \Lambda \, \{(n_{c0}/dT) - (n_{c1}^{(n)}/dT)\} \qquad (4)$$

Accordingly, it can be understood that the temperature dependency shift characteristic of the Nth-order light transmission loss peak wavelength occurs due to the difference between the effective refractive index of the core in the propagation mode and the effective refractive index in the n-th order cladding mode (herein, n = N). Note that the temperature dependency shift characteristic of the first-order light transmission loss peak wavelength occurs due to the difference between the effective refractive index inside the core in the propagation mode and the effective refractive index in the first-order cladding mode. Then, the temperature dependency shift characteristic of the Nth-order light transmission loss peak wavelength differs depending on the order of the respective cladding modes.

Further, if the optical fiber constituting the fiber grating optical device is the single mode optical fiber having the above specific refractive index difference $\Delta$ as in this embodiment, $(n_{c0}/dt) > (n_{c1}^{(n)}/dT)$ is established. Therefore, the light transmission loss peak wavelengths in the first- through Nth-orders shift to the longer wavelength side as the temperature rises.

Then, the grating period is set to about 440 μm, the set-order mode is set to the fourth-order mode, and the temperature dependency shift characteristic of the light transmission loss peak wavelength (about 1510 nm) in the fourth-order mode is obtained using the formula (4). As a result, the shift characteristic is approximately 0.04 nm/°C.

Further, the long period grating of which the grating period is approximately 440 μm is actually formed in the single mode optical fiber of which the composition and the values of the core diameter and of the specific refractive index difference $\Delta$ are set to the above values, thereby obtaining the fiber grating optical device of this embodiment. The light transmission loss characteristics at 0°C, 25°C and 65°C with respect to this fiber grating optical device are obtained and shown in Fig. 1. Moreover, the light transmission loss characteristics at 0°C and 65°C when based on the characteristic at 25°C are as shown in Fig. 3.

Then, this fiber grating optical device is combined with the EDFA device exhibiting the characteristic shown in Fig. 9. The gain temperature dependency of the EDFA device plus the fiber grating optical device in the transmission band is obtained, and the result is as shown in Fig. 8. The gain temperature dependency in a temperature range of 0°C ~ 65°C can be set to ± 0.2 dB or under over the entire transmission band.

According to this embodiment, based on the results of the above examinations, the long period grating having the grating period of approximately 440 μm is formed in the above single mode optical fiber. With this formation, the light transmission loss peak wavelength (about 1510 nm) in the fourth-order mode is 0.04 nm/°C, and the light transmission loss at 65°C in 1530 nm is set larger by approximately 0.4 dB than the light transmission loss at 25°C. Therefore, as shown in Fig. 8, the gain temperature dependency of the conventional EDFA device in the band (wavelengths of 1530 nm ~ 1540 nm) for compensating the temperature dependent gain characteristic of the optical amplifier, can be compensated to ± 0.2 dB or under within the range of 0°C ~ 65°C. With this compensation, the gain temperature dependency of the EDFA device can be set to ± 0.2 dB or smaller over the entire transmission band.

Further, according to this embodiment, the protective member 3 accommodates the fiber grating forming portion 6, which can make it difficult for the force given from outside to exert the influence upon the fiber grating forming portion 6 and can prevent a change in the cladding mode of the optical fiber 2. It is therefore feasible to obtain the highly-reliable fiber grating optical device exhibiting the excellent characteristic described above and capable of keeping the characteristic over a long period of time.

Note that the present invention is not limited to the embodiment discussed above and may take a variety of modes for carrying out the invention. For example, the change in the grating period is set to approximately 440 $\mu$m in this embodiment but may be properly set otherwise without being particularly limited.

For instance, when the transmission band is set to 1530 nm or larger and the light transmission loss peak wavelength is to be formed in the vicinity of a wavelength of 1510 nm on the shorter wavelength side than this transmission band, each of the characteristic curves shown in Fig. 6 has the cross-point with the line of a wavelength of 1.51 $\mu$m (1510 nm). Accordingly, the set-order mode is determined in accordance with the value of change in the grating period, whereby even if the value of change in the grating period deviates from about 440 $\mu$mm, the fiber grating optical device having the light transmission loss peak wavelength in the vicinity of a wavelength of 1510 nm can be formed.

However, it is required that the easiness of manufacturing the fiber grating optical device and a breadth of the transmission band be considered as described above. Therefore, in the case of setting the transmission band to 1530 nm ~ 1610 nm, it is preferable that the long period grating of which the change in the grating period is approximately 300 $\mu$m ~ 500 $\mu$m be formed in the single mode optical fiber. In particular, as in the embodiment discussed above, it is preferable that the long period grating of which the change in the grating period is approximately 400 $\mu$m be formed in the single mode optical fiber.

Further, in the embodiment described above, the temperature dependency shift characteristic of the light transmission loss peak wavelength in a wavelength of 1510 nm is set to 0.04 nm/$^\circ$C. However, the temperature dependency shift characteristic may be properly set otherwise without being particularly limited. For example, the temperature dependency shift characteristic of the light transmission loss peak wavelength may be set to 0.02 nm/$^\circ$C ~ 0.05 nm/$^\circ$C, whereby substantially the same effect as the embodiment discussed above can be obtained.

Note that the core is doped with boron ($B_2O_3$) in an amount determined in relation to the amount of germanium ($GeO_2$) (the ratio of boron to germanium is, e.g., 1 to 3), whereby the temperature dependency shift characteristic of the light transmission loss peak wavelength can be set to 0.02 nm/$^\circ$C. In this case also, it is appropriate that the gain temperature dependency of the optical amplifier such as an EDFA in 1530 nm ~ 1540 nm is compensated to, e.g., $\pm$ 0.2 dB or smaller within the use environment temperature range.

For instance, when the temperature dependency shift characteristic of the light transmission loss peak wavelength is set to 0.02 nm/$^\circ$C, the light transmission loss characteristic of the fiber grating optical device is appropriately set such that the difference between the maximum value and the minimum value of the light transmission loss within the use temperature range (0$^\circ$C ~ 65$^\circ$C) is 2.6 dB or less in the wavelength band of approximately 1530 nm ~ 1540 nm for compensating the EDFA gain temperature characteristic as shown in Fig. 2B

Further, depending on the characteristic of the optical amplifier whose temperature dependent gain characteristic is compensated by the fiber grating optical device according to the present invention, the fiber grating optical device may be formed such that the temperature dependency shift characteristic of the light transmission loss peak wavelength is set to a negative value, the peak wavelength of the waveform of the light transmission loss characteristic shifts to the shorter wavelength side depending on the temperature, and the waveform of the light transmission loss characteristic also shifts to the same side as the peak wavelength depending on the temperature. In this case, it is appropriate to structure the fiber grating optical device such that the waveform of the light transmission loss characteristic shifts to the shorter wavelength side depending on the temperature, the value of the light transmission loss in the band for compensating the gain temperature characteristic of the optical amplifier thereby decreases depending on the temperature, and the gain temperature characteristic of the optical amplifier is compensated based on the increase or the decrease in this light transmission loss value.

Further, as shown in the formulae (2) and (4), the light transmission loss peak wavelengths in the first-order through Nth-order modes and the temperature dependency shift characteristics thereof, change depending also on the effective refractive index inside the core in the propagation mode. Therefore, it is also possible to control the light transmission loss peak wavelengths in the first-order through Nth-order modes and the temperature dependency shift characteristics thereof by changing the effective refractive index of the core in the propagation mode, so that the gain temperature dependency of the optical amplifier such as an EDFA in wavelengths of approximately 1530 nm ~ 1540 nm is compensated to, e.g., $\pm$ 0.2 dB or smaller within the use environment temperature range.

In this case, in order to change the effective refractive index of the core in the propagation mode, the refractive index of the core may be changed (e.g., increased) by, for example, changing the specific refractive index difference $\Delta$ of the core by varying the amount of germanium used to dope the optical fiber, or by changing a quantity of ultraviolet rays when forming the fiber grating.

Furthermore, the transmission band is set to 1530 nm ~ 1610 nm in the embodiment discussed above but is not particularly limited. The transmission band may be properly set in accordance with, e.g., the wavelength band applied to the wavelength division multiplexing transmission system.

Moreover, the compensation band of the temperature dependent gain characteristic of an EDFA is set to approximately 1530 nm ~ 1540 nm in the embodiment discussed above but is not particularly limited. The compensation band may properly be set in accordance with, e.g., the optical amplifier such as an EDFA, the wavelength division multiplexing transmission wavelength band, etc., that are applied to the wavelength division multiplexing transmission system.

Further, in the embodiment discussed above, the compensation band of the temperature dependent gain characteristic of an EDFA is set to approximately 1530 nm ~ 1540 nm, and the light transmission loss peak wavelength in the set-order mode is set to about 1510 nm in accordance with this compensation band. The light transmission loss peak wavelength in the set-order mode is, however, properly set in accordance with the compensation band of the gain temperature characteristic of, e.g., the EDFA. Furthermore, the light transmission loss peak wavelength in the set-order mode is properly set within the range of, e.g., approximately 1500 nm ~ 1525 nm also when the above compensation band is set to approximately 1530 nm ~ 1540 nm.

Further, in the embodiment described above, the set-order mode is the fourth-order mode but it may properly be set otherwise without being particularly limited. If the set-order mode is selected from any one of, e.g., the fourth- through seventh-order modes in accordance with the change in the period of the long period grating, it is easy to form the fiber grating optical device that can provide substantially the same effect as in the embodiment explained above.

Moreover, in the embodiment discussed above, as shown in Fig. 5, the protective member 3 accommodates the fiber grating forming portion 6. However, the configuration, such as the shape, of the protective member 3 is not particularly limited and may properly set. The protective member 3 composed of the quartz material accommodates the fiber grating forming portion 6, whereby the light transmission loss characteristic of the fiber grating optical device can be held and the same effect as in the embodiment discussed above can be obtained.

Note that the protective member 3 may be omitted by using a method of re-coating, or the like. However, the light transmission loss characteristic of the fiber grating optical device can be held by providing the protective member 3, and hence it is desirable that this protective member 3 be provided.

Furthermore, the discussion in the embodiment given above has been focused on the example where the fiber grating optical device of the embodiment described above is combined with the device constructed by combining the EDFA with the etalon filter that have hitherto been developed. The characteristic of the etalon filter to be combined with EDFA is not particularly limited but may be properly set. The light transmission loss characteristic of the fiber grating optical device according to the present invention can be set in accordance with the EDFA device that changes in accordance with the characteristic of the etalon filter.

Moreover, also in the case where the fiber grating optical device of this embodiment alone is combined with the optical amplifier such as an EDFA, the gain temperature dependency of the optical amplifier such as an EDFA in wavelengths of approximately 1530 nm ~ 1540 nm can be compensated within the use environment temperature range.

In addition, the optical amplifier whose gain temperature dependency is compensated by the present invention is not necessarily limited to the EDFA. As long as it is an optical amplifier like the EDFA having the temperature dependency on the shorter wavelength side in the transmission band, a rare earth doped optical fiber amplifier other than the EDFA, or an optical amplifier excluding the optical fiber amplifier may also be used.

Moreover, in the embodiment discussed above, the fiber grating optical device is constructed by forming the long period grating in the optical fiber 2 as the light waveguide. However, the fiber grating optical device according to the present invention may be constructed by, for example, forming the long period grating in a light waveguide provided in a planar light waveguide circuit and the like.

Industrial Applicability

As described above, the fiber grating optical device of the present invention is suitable for use as the optical component coupled to the optical amplifier in order to compensate the temperature dependent gain characteristic of the optical amplifier so that the gain is flattened over the entire area of the transmission band.

**Claims**

1. A fiber grating optical device comprising:

   a light waveguide constructed of a core and a cladding; and
   a long period grating formed in said light waveguide,
   in which a peak wavelength of a waveform of a light transmission loss characteristic that is positioned on the shorter wavelength side than a transmission band due to a coupling of a high-order cladding mode to a propagation mode through said long period grating, shifts to the longer wavelength side or to the shorter wavelength side depending on the temperature, and

in which the waveform of the light transmission loss characteristic also shifts to the same side as the peak wavelength depending on the temperature, said fiber grating optical device **characterized in that**

a light transmission loss value in a band for compensating a temperature dependent gain characteristic of an optical amplifier increases or decreases depending on the temperature by the shift of the waveform of the light transmission loss characteristic toward the longer wavelength side or toward the shorter wavelength side depending on the temperature, and that

the temperature dependent gain characteristic of said optical amplifier is compensated by the increase or decrease of the light transmission loss value.

2. A fiber grating optical device according to claim 1, **characterized in that** the peak wavelength of the waveform of the light transmission loss characteristic is on the shorter wavelength side than the transmission band, and that the difference between the maximum value and the minimum value of the light transmission loss within a use temperature range is set to 0.5 dB or under in a band on the longer wavelength side than the band for compensating the temperature dependent gain characteristic of said optical amplifier in the transmission band.

3. A fiber grating optical device according to claim 1, **characterized in that** the difference between the maximum value and the minimum value of the light transmission loss within the use temperature range is set to 2.6 dB or under in the band for compensating the temperature dependent gain characteristic of said optical amplifier.

4. A fiber grating optical device according to claim 2, **characterized in that** the difference between the maximum value and the minimum value of the light transmission loss within the use temperature range is set to 2.6 dB or under in the band for compensating the temperature dependent gain characteristic of said optical amplifier.

5. A fiber grating optical device comprising:

a light wave guide constructed of a core and a cladding; and
a long period grating formed in said light waveguide, with a change in a grating period being approximately 100 μm ~ several hundreds μm, **characterized in that**:

said light waveguide has a light transmission loss characteristic having a plurality of light transmission loss peaks with wavelength intervals interposed therebetween in a first-order mode through an Nth-order (N is an integer of 2 or larger) mode due to a coupling of a high-order cladding mode to a propagation mode through said long period grating;
a transmission loss peak wavelength in a predetermined set-order mode among those light transmission loss peaks, is on the shorter wavelength side than a transmission band;
a light transmission loss peak wavelength in the next order mode to the set-order mode is on the longer wavelength side than the transmission band;
the difference between the maximum value and the minimum value of the light transmission loss within a use temperature range is set to 0.5 dB or under in a band on the longer wavelength side than a band for compensating the temperature dependent gain characteristic of an optical amplifier in the transmission band;
the light transmission loss peak wavelength in the set-order mode shifts, as well as a waveform of the light transmission loss characteristic including the light transmission loss peak wavelength, to the longer wavelength side or to the shorter wavelength side depending on the temperature; and
a light transmission loss value in the band for compensating the temperature dependent gain characteristic of said optical amplifier thereby increases or decreases depending on the temperature to compensate the temperature dependent gain characteristic of said optical amplifier.

6. A fiber grating optical device according to claim 5, **characterized in that**

the transmission band is set to approximately 1530 nm ~ 1610 nm, and that
the light transmission loss peak wavelength in the set-order mode is set to approximately 1500 nm ~ 1525 nm.

7. A fiber grating optical device according to claim 5, **characterized in that** the light transmission loss peak wavelength in the set-order mode shifts depending on the temperature toward the longer wavelength side by approximately 0.02 nm/°C ~ 0.05 nm/°C.

**8.** A fiber grating optical device according to claim 6, **characterized in that** the light transmission loss peak wavelength in the set-order mode shifts depending on the temperature toward the longer wavelength side by approximately 0.02 nm/°C ~ 0.05 nm/°C.

**9.** A fiber grating optical device according to any one of claims 1 through 8, **characterized in that** a change in the grating period is set to approximately 300 μm ~ 500 μm.

**10.** A fiber grating optical device according to claim 5, **characterized in that** the set-order mode is set to any one of a fourth-order through a seventh-order mode.

**11.** A fiber grating optical device according to claim 6, **characterized in that** the set-order mode is set to any one of a fourth-order through a seventh-order mode.

**12.** A fiber grating optical device according to claim 7, **characterized in that** the set-order mode is set to any one of a fourth-order through a seventh-order mode.

**13.** A fiber grating optical device according to claim 8, **characterized in that** the set-order mode is set to any one of a fourth-order through a seventh-order mode.

**14.** A fiber grating optical device according to claim 9, **characterized in that** the set-order mode is set to any one of a fourth-order through a seventh-order mode.

**15.** A fiber grating optical device according to claim 1, **characterized in that** a light transmission loss in a wavelength of 1530 nm at 65 °C is larger by approximately 0.4 dB ~ 0.6 dB than a light transmission loss at 25°C.

**16.** A fiber grating optical device according to claim 2, **characterized in that** a light transmission loss in a wavelength of 1530 nm at 65°C is larger by approximately 0.4 dB ~ 0.6 dB than a light transmission loss at 25°C.

**17.** A fiber grating optical device according to claim 3, **characterized in that** a light transmission loss in a wavelength of 1530 nm at 65°C is larger by approximately 0.4 dB ~ 0.6 dB than a light transmission loss at 25°C.

**18.** A fiber grating optical device according to claim 4, **characterized in that** a light transmission loss in a wavelength of 1530 nm at 65°C is larger by approximately 0.4 dB ~ 0.6 dB than a light transmission loss at 25°C.

**19.** A fiber grating optical device according to claim 5, **characterized in that** a light transmission loss in a wavelength of 1530 nm at 65°C is larger by approximately 0.4 dB ~ 0.6 dB than a light transmission loss at 25°C.

**20.** A fiber grating optical device according to claim 6, **characterized in that** a light transmission loss in a wavelength of 1530 nm at 65°C is larger by approximately 0.4 dB ~ 0.6 dB than a light transmission loss at 25°C.

**21.** A fiber grating optical device according to claim 7, **characterized in that** a light transmission loss in a wavelength of 1530 nm at 65°C is larger by approximately 0.4 dB ~ 0.6 dB than a light transmission loss at 25°C.

**22.** A fiber grating optical device according to claim 8, **characterized in that** a light transmission loss in a wavelength of 1530 nm at 65°C is larger by approximately 0.4 dB ~ 0.6 dB than a light transmission loss at 25°C.

**23.** A fiber grating optical device according to claim 9, **characterized in that** a light transmission loss in a wavelength of 1530 nm at 65°C is larger by approximately 0.4 dB ~ 0.6 dB than a light transmission loss at 25°C.

**24.** A fiber grating optical device according to claim 10, **characterized in that** a light transmission loss in a wavelength of 1530 nm at 65°C is larger by approximately 0.4 dB ~ 0.6 dB than a light transmission loss at 25°C.

**25.** A fiber grating optical device according to claim 11, **characterized in that** a light transmission loss in a wavelength of 1530 nm at 65°C is larger by approximately 0.4 dB ~ 0.6 dB than a light transmission loss at 25°C.

**26.** A fiber grating optical device according to claim 12, **characterized in that** a light transmission loss in a wavelength of 1530 nm at 65°C is larger by approximately 0.4 dB ~ 0.6 dB than a light transmission loss at 25°C.

**27.** A fiber grating optical device according to claim 13, **characterized in that** a light transmission loss in a wavelength of 1530 nm at 65°C is larger by approximately 0.4 dB ~ 0.6 dB than a light transmission loss at 25°C.

**28.** A fiber grating optical device according to claim 14, **characterized in that** a light transmission loss in a wavelength of 1530 nm at 65°C is larger by approximately 0.4 dB ~ 0.6 dB than a light transmission loss at 25°C.

**29.** A fiber grating optical device according to claim 1, **characterized in that** said light waveguide is an optical fiber.

**30.** A fiber grating optical device according to claim 29, **characterized in that** a protective member composed of a quartz material accommodates a grating forming portion.

Fig. 1 A

Fig. 1 B

Fig. 2 A

Fig. 2 B

Fig. 3

Fig. 4

Fig. 5 A

Fig. 5 B

Fig. 5 C

Fig. 5 D

Fig. 5 E

Fig. 5 F

## Fig. 6

WAVELENGTH (μm)

GRATING PERIOD (μm)

## Fig. 7

LIGHT TRANSMISSION CHARACTERISTIC

1st order    2nd order    3rd order    4th order    5th order

WAVELENGTH (nm)

Fig. 8

Fig. 9

Fig.10

Fig. 1 1

Fig. 1 2

## INTERNATIONAL SEARCH REPORT

International application No.

PCT/JP00/07544

| A. CLASSIFICATION OF SUBJECT MATTER |
|---|
| Int.Cl⁷ G02B 6/16, 6/10 |

According to International Patent Classification (IPC) or to both national classification and IPC

| B. FIELDS SEARCHED |
|---|
| Minimum documentation searched (classification system followed by classification symbols)<br>Int.Cl⁷ G02B 6/00-6/54, H01S 3/067 |

Documentation searched other than minimum documentation to the extent that such documents are included in the fields searched

| Jitsuyo Shinan Koho | 1922-1996 | Toroku Jitsuyo Shinan Koho | 1994-2000 |
|---|---|---|---|
| Kokai Jitsuyo Shinan Koho | 1971-2000 | Jitsuyo Shinan Toroku Koho | 1996-2000 |

Electronic data base consulted during the international search (name of data base and, where practicable, search terms used)
    IEEE/IEE Electronic Library online,
    JICST FILE(JOIS)

### C. DOCUMENTS CONSIDERED TO BE RELEVANT

| Category* | Citation of document, with indication, where appropriate, of the relevant passages | Relevant to claim No. |
|---|---|---|
| X | JP, 10-319259, A (Sumitomo Electric Industries, Ltd.), 04 December, 1998 (04.12.98), Column 4, lines 18 to 32; Column 5, lines 34 to 40; Figs. 1, 2, 7, 8 (Family: none) | 1,5 |
| X | PATRICK, H.J. ET AL.: Erbium-doped superfluorescent fibre source with long period fibre grating wavelength stabilisation; ELECTRONICS LETTERS, 20th November 1997, Vol.33, No.24, pp.2061-2063 | 1,5 |
| A | VENGSARKAR, A.M. ET AL.: Long-period fiber-grating-based gain equalizers; OPTICS LETTERS, 01 March, 1996, Vol.21, No.5, pp.336-338 | 1-30 |
| A | VENGSARKAR, A.M. ET AL.: Long-Period Fiber Gratings as Band-Rejection Filters; JOURNAL OF LIGHTWAVE TECHNOLOGY, JANUARY 1996, VOL.1, NO.1, pp.58-65 especially, p. 62, right column; Fig. 12 | 1-30 |
| A | Michiko HARUMOTO et al., "Juretsu Choushuuki Fiber Grating ni yoru L-Band you Ritoku Toukaki"; Proceedings 1 of Electronics Society Meeting (1999), | 1-30 |

☒ Further documents are listed in the continuation of Box C.　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>24 January, 2001 (24.01.01) | Date of mailing of the international search report<br>06 February, 2001 (06.02.01) |
|---|---|
| Name and mailing address of the ISA/<br>    Japanese Patent Office | Authorized officer |
| Facsimile No. | Telephone No. |

Form PCT/ISA/210 (second sheet) (July 1992)

**INTERNATIONAL SEARCH REPORT**

International application No.

PCT/JP00/07544

| C (Continuation). DOCUMENTS CONSIDERED TO BE RELEVANT | | |
|---|---|---|
| Category* | Citation of document, with indication, where appropriate, of the relevant passages | Relevant to claim No. |
| | the Institute of Electronics, Information and Communication Engineer,16 August, 1999, C-3-72, p.178 | |
| P,A | EP, 1003253, A2 (LUCENT TECHNOLOGIES INC.), 24 May, 2000 (24.05.00) & JP, 2000-164955, A& US, 6049414, A | 1-30 |
| P,A | WO, 00/02291, A1 (The Furukawa Electric Co., Ltd.), 13 January, 2000 (13.01.00) & EP, 1033794, A1 & JP, 2000-82858, A | 1-30 |
| E,A | EP, 1063741, A2 (FUJITSU LIMITED), 27 December, 2000 (27.12.00) & JP, 2000-341213, A | 1-30 |

Form PCT/ISA/210 (continuation of second sheet) (July 1992)